# EUROPÄISCHE PATENTSCHRIFT

(11) **EP 1 058 611 B1**
(45) Veröffentlichungstag und Bekanntmachung des Hinweises auf die Patenterteilung: **07.05.2003**
(21) Anmeldenummer: 99913067.7
(22) Anmeldetag: 02.02.1999
(51) Int. Cl.: B29C 44/34, B29C 35/06

(54) **VERFAHREN UND VORRICHTUNG ZUM HERSTELLEN VON VERNETZTEN POLYOLEFINSCHÄUMEN**
PROCESS AND DEVICE FOR PRODUCING CROSS-LINKED POLYOLEFIN FOAMS
PROCEDE ET DISPOSITIF PERMETTANT DE CREER DES MOUSSES DE POLYOLEFINE RETICULEES

(30) Priorität: 03.02.1998 DE 19804201
(43) Veröffentlichungstag der Anmeldung: 13.12.2000
(73) Patentinhaber: HT TROPLAST AG, 53840 Troisdorf (DE)
(72) Erfinder: BECHLENBERG, Karl, Theodor, D-82467 Garmisch-Partenkirchen (DE)
(86) Internationale Anmeldenummer: DE9900277
(87) Internationale Veröffentlichungsnummer: WO99039892

(56) Entgegenhaltungen:
- FR-A- 1 410 686
- US-A- 2 928 124
- US-A- 3 624 806
- US-A- 5 310 513

## Beschreibung

### Techniches Gebiet

Die Erfindung bezieht sich auf ein Verfahren zum Vernetzen und Aufschäumen von vernetzbaren Polyolefinplatten oder -folien oder zum Aufschäumen von vernetzten Polyolefinplatten oder -folien nach dem Oberbegriff des Patentanspruchs 1 sowie auf eine Vorrichtung insbesondere zum Durchführen eines solchen Verfahrens nach dem Oberbegriff des Patentanspruchs 5.

Als Polyolefine werden Polymere der allgemeinen Struktur 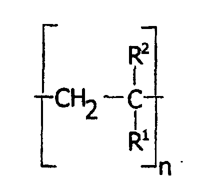 bezeichnet, wobei R¹ für Wasserstoff und R² für Wasserstoff oder geradkettige oder verzweigte Gruppen stehen. Im Falle, daß R¹ und R² für Wasserstoff stehen, ergeben sich Polymere mit Gruppierungen des Typs 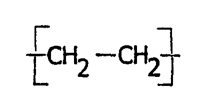 als charakteristische Grundeinheit der Polymerkette. Die letztgenannten Polymere werden Polyethylene bezeichnet.

In Abhängigkeit von dem jeweiligen Herstellungsverfahren sind Hochdruck- und Niederdruck-Polyethylene bekannt. Diese unterscheiden sich vor allem hinsichtlich ihres Verzweigungsgrades und ihrer Dichte. Man unterscheidet vor allem zwischen PE-LD (low density Polyethylene), PE-LLD (linear low density Polyethylene), PE-HD (high density Polyethylene), PE-HD-MHW (high density Polyethylene with high molekular weight), PE-VLD-Typen (very low density Polyethylene).

Die Dichten derartiger Schäume liegen etwa zwischen 25 bis 200 Kg/m³. Die Schäume weisen eine weitgehend geschlossene Zellenstruktur auf.

Zur Erhöhung der Viskosität bzw. der Härte der Polymere ist eine Vernetzung, d. h. eine Reaktion erforderlich, bei der vorliegende lineare oder verzweigte Makromoleküle miteinander zu dreidimensionalen polymeren Netzwerken verknüpft werden. Eine derartige Vernetzung kann unter Einwirkung von energiereicher Strahlung oder mit Hilfe von Peroxiden oder Silanen erfolgen.

Die charakteristische Schaumstruktur entsteht aufgrund chemischer Reaktionen unter Zugabe von sogenannten Blähmitteln, die sich bei einer bestimmten Temperatur während der Verarbeitung unter Gasbildung zersetzen. Übliche Blähmittel sind z. B. Azo- und Diazo-Verbindungen. Blähmittel werden in der Schaumstoffindustrie porenbildende Treibmittel genannt, die unter dem Einfluß von Wärme und gegebenenfalls Katalysatoren Gase abspalten und daher zur Herstellung geschäumter Kunststoffmas-sen geeignet sind.

Die Verschäumung kann beim Verlassen des Extrusionswerkzeugs, also unmittelbar im Anschluß an das Extrudieren oder Spritzgießen, oder in offenen Formen erfolgen.

Zunächst wird eine kompakte Polyolefinplatte oder -folie aus einem Gemisch eines Polyolefins mit einem Blähmittel und einem Vernetzungsmittel vorzugsweise durch Extrusion über einen Extruder mit Breitschlitzdüsen hergestellt. Diese Platte oder Folie wird auch Matrix genannt. Bei diesem Herstellungsprozeß ist die Verarbeitungstemperatur derart eingestellt, daß weder das Vernetzungsmittel noch das Blähmittel ihren jeweiligen Zersetzungspunkt erreichen. Sodann erfolgt die zuvor erwähnte Vernetzung des Polyolefins auf einem Temperaturniveau, bei welchem die Zersetzungstemperatur des Vernetzungsmittels erreicht oder überschritten, die Zersetzungstemperatur des Blähmittels jedoch noch nicht erreicht ist. Erst wenn die Vernetzung nahezu abgeschlossen ist, wird beispielsweise durch eine weitere Wärmezufuhr die Zersetzung des Blähmittels und damit der Aufschäumprozeß eingeleitet, wobei diese Phase des gesamten Herstellungsprozesses exotherm verläuft.

### Stand der Technik

Ein Verfahren und eine Vorrichtung der eingangs erwähnten Art sind aus der Praxis bekannt. Das Vernetzen und Aufschäumen bzw. das Aufschäumen allein erfolgt in einem Ofen, welcher aus mehreren hintereinander angeordneten Zonen besteht. Jeder Zone des Ofens ist ein Ventilator sowie ein sogenannter Blaskasten zugeordnet. Jeder Blaskasten weist einen oberen Teil mit vertikal nach unten gerichteten Öffnungen sowie einen unteren Teil mit vertikal nach oben gerichteten Öffnungen auf. Die beiden Teile jedes Blaskastens sind übereinander angeordnet, voneinander beabstandet und an den, der jeweiligen Zone zugeordneten Ventilator angeschlossen. Zwischen den Teilen jedes Blaskastens läuft die Polyolefinplatte oder -folie, welche beispielsweise von einer Rolle abgewickelt, zwischen den übereinander angeordneten Teilen jedes Blaskastens hindurchgeführt, dabei erwärmt, vernetzt und aufgeschäumt und schließlich auf eine Aufwickelrolle aufgewickelt wird. Zwischen dem Ofen und der Aufwickelrolle sind in aller Regel mehrere Kühlwalzen zum Transportieren und Abkühlen der Polyolefinplatte oder -folie vorgesehen. Üblicherweise handelt es sich dabei um einen kontinuierlichen Prozeß, wobei die Platte oder Folie in aller Regel mit Hilfe eines umlaufenden Netzes oder Trägerbandes durch den Ofen und zwischen den Teilen der Blaskästen hindurch transportiert wird.

Die Erwärmung der Platte oder Folie erfolgt über die Ventilatoren und Blaskästen mit Hilfe von Heißluft. Die Temperatur der Heißluft in den einzelnen Zonen wird auf den jeweils erforderlichen Wert eingestellt. Üblicherweise erfolgt zunächst die Vernetzung des Polyolefins und in einer späteren, wärmeren Zone des Ofens das Aufschäumen des Materials. Derartige Öfen sind meist in drei bis fünf Zonen unterteilt, wobei, wie zuvor erwähnt, jede Zone aus wenigstens einem Ventilator, einem aus zwei Teilen bestehenden Blaskasten und einer Temperaturerzeugungs- und - regeleinrichtung besteht. Der bautechnische Aufwand derartiger Vorrichtungen ist deshalb erheblich, so daß bei Anwendung des bekannten Verfahrens mit hohen Investitions- und Betriebskosten zu rechnen ist.

In der US-A-5 310 513 wird eine derartige Vorrichtung dargestellt.

### Aufgabe

Der Erfindung liegt die Aufgabe zugrunde, ein Verfahren der eingangs erwähnten Art zu schaffen, das insbesondere bei kleinen Mengen wirtschaftlicher durchführbar ist. Der Erfindung liegt auch die Aufgabe zugrunde, eine Vorrichtung der eingangs erwähnten Art anzugeben, welche mit geringerem Aufwand hergestellt und betrieben werden kann.

### Darstellung der Erfindung

Diese Aufgabe wird verfahrensseitig durch ein Verfahren mit den Merkmalen des Patentanspruchs 1 und vorrichtungsseitig durch eine Vorrichtung mit den Merkmalen des Patentanspruchs 5 gelöst.

Erfindungsgemäß strömt die Heißluft entgegen der Transportrichtung der Polyolefinplatte oder -folie an dieser entlang. Bei einem derartigen Gegenstromprinzip kommt derjenige Teil der Platte, welcher sich bereits schon längere Zeit im Ofen befindet, zuerst mit der Heißluft in Berührung. Im weiteren Verlauf strömt diese an der Platte entlang, gibt also einen Teil ihrer Wärmeenergie an diese ab, so daß die Temperatur der Heißluft von ihrer ersten Aufbringung auf die Platte bis zu dem gegenüberliegenden Abschnitt der Platte abfällt, an dem die Heißluft sich auf einem niedrigerem Temperaturniveau befindet und wieder zum Ventilator zurückgeführt wird. Ein derartiges Verfahren ist somit besonders kostengünstig durchführbar, da die Platte mit Luft auf einem hohen Temperaturniveau in einem Bereich beaufschlagt wird, wo der Aufschäumprozeß stattfindet, und mit Luft auf einem geringeren Temperaturniveau in dem Bereich beaufschlagt wird, in dem beispielsweise die Vernetzung der Polyolefine auf einem geringeren Temperaturniveau erfolgen soll.

Vorteilhafterweise strömt die Heißluft an der Oberseite und an der Unterseite der Polyolefinplatte oder -folie entlang. Dadurch ist ein gleichmäßiges Erwärmen über die gesamte Platte- oder Foliendicke gewährleistet.

Gemäß einer vorteilhaften Weiterbildung der Erfindung wird der Wärmeübergang zwischen der Heißluft und der Polyolefinplatte oder -folie über eine Regelung der Strömungsgeschwindigkeit der Heißluft eingestellt, indem ein Teil der entlang der Platte oder Folie strömenden Heißluft von dieser abgeleitet wird. Damit ist es bei konstantem Fördervolumen des Ventilators auf einfache Weise möglich, das Temperaturniveau in Strömungsrichtung der Heißluft gezielt zu beeinflussen und somit der Platte oder Folie in jedem Bereich diejenige Wärmemenge zuzuführen, die in diesem Bereich für die jeweilige chemische Reaktion, wie z. B. das Vernetzen oder Aufschäumen, gerade benötigt wird.

Vorteilhafterweise wird die Heißluft in einem nahezu geschlossenen Kreislauf geführt, was die Kosten zum Durchführen des Verfahrens weiter günstig beeinflußt und zu einem besonders umweltfreundlichen Verfahren führt, da die Umweltbelastung, so z. B. der Gehalt der Abluft an Schadstoffen, aufgrund der geschlossenen Bauweise stark reduziert wird.

Vorrichtungsseitig ist die Einrichtung zum Erwärmen der Polyolefinplatte oder -folie erfindungsgemäß derart angeordnet und ausgebildet, daß die Strömungsrichtung der aus der Einrichtung austretenden Heißluft etwa parallel zur Platten- oder Folienebene verläuft. Damit strömt die Luft über die Platte oder Folie und kann daher ihren Wärmeinhalt gleichmäßig an die Platte oder Folie abgeben. Die Temperatur der Heißluft verringert sich als längs des Strömungsweges der Heißluft. Der Wärmeinhalt der bereits ein Stück über die Platte oder Folie hinweggeströmten Heißluft kann also stromabwärts befindlichen Abschnitten der Platte zugutekommen und diese erwärmen. Damit weist auch die erfindungsgemäße Vorrichtung längs des Strömungsweges der Heißluft unterschiedliche Temperaturen auf, ohne jedoch, wie im Fall des Standes der Technik, dazu einen hohen apparativen Aufwand zu benötigen. Die erfindungsgemäßen Vorteile ergeben sich vor allem aufgrund der für die Wärmeübertragung günstigen Strömungsführung der Heißluft über die Platte oder Folie.

Vorteilshafterweise verläuft die Strömungsrichtung der Heißluft in Längsrichtung der Platte oder Folie, wobei die Heißluft vorzugsweise im Gegenstrom zur Transportrichtung der durch den Ofen geleiteten Platte oder Folie geführt ist. Damit ist auch ein kontinuierlicher Betrieb der erfindungsgemäßen Vorrichtung, so z. B. ein Transportieren einer sehr fangen Polyolefinfolie mit gleichmäßiger Geschwindigkeit durch die Vorrichtung, möglich. Die Vorteile der erfindungsgemäßen Gegenstromführung wurden bereits bei dem erfindungsgemäßen Verfahren angegeben.

Gemäß einer vorteilhaften Weiterbildung der Erfindung weist die Einrichtung zum Erwärmen der Polyolefinplatte oder -folie wenigstens einen die Platte oder Folie umschließenden Wärmetunnel auf, wobei der Wärmetunnel die Polyolefinplatte oder - folie vorzugsweise in deren Querrichtung vollständig umschließt und sich nahezu über den gesamten, im Ofen befindlichen Längsabschnitt der Platte oder Folie erstreckt. Damit ist es möglich, die beim Aufschäumungsprozeß freiwerdende exotherme Energie der Heißluft und unmittelbar einem in Strömungsrichtung der Heißluft nachgeordneten Bereich der Platte oder Folie zur Verfügung zu stellen. Der erfindungsgemäße Wärmetunnel ist konstruktiv einfacher als mehrere hintereinander angeordnete Blaskästen aufgebaut, da sich die Platte oder Folie unmittelbar im Wärmetunnel befindet und nicht, wie im Falle des Standes der Technik, durch zwei übereinander unter Belassung eines Zwischenraumes angeordnete Teile eines Blaskastens hindurchzuführen ist. Dadurch ergeben sich geringere Investitionskosten. Außerdem weist die erfindungsgemäße Vorrichtung im Vergleich zu einer herkömmlichen Vorrichtung ein geringeres Gewicht auf.

Gemäß einer anderen Weiterbildung der Erfindung weist die Einrichtung zum Erwärmen der Polyolefinplatte oder -folie eine Einrichtung zum zumindest teilweisen vorzeitigen Rückführen der Heißluft auf, wobei diese vorzugsweise wenigstens eine im Wärmetunnel vorgesehene Klappe ist, mit deren Hilfe zumindest ein Teil der den Wärmetunnel durchströmenden Heißluft in den außerhalb des Wärmetunnels angeordneten Bereich des Ofens ableitbar ist. Mit Hilfe dieser Klappe ist eine einfache Möglichkeit geschaffen, den durch den Wärmetunnel strömenden Volumenstrom und damit die Strömungsgeschwindigkeit des verbleibenden Teils der Heißluft im Wärmetunnel zu reduzieren. Damit ist der Wärmeübergang zwischen der Heißluft und der Platte oder Folie durch die Strömungsgeschwindigkeit und die Temperatur der umlaufenden Heißluft regelbar.

Vorteilhafterweise ist die Klappe schwenkbar in der Wand des Wärmetunnels gelagert und bildet einen Teil derselben. Dadurch ist es auf einfache Weise, nämlich durch ein Herunterschwenken der Klappe, möglich, einen Teil der Heißluft aus dem Wärmetunnel herauszuführen.

Gemäß einer Weiterbildung der Erfindung ist die Klappe etwa in der Längsmitte des Wärmetunnels in dem oberhalb der Polyolefinplatte oder -folie angeordneten Teil desselben angeordnet. Diese Weiterbildung der Erfindung ist besondere dann vorteilhaft, wenn der Ventilator ebenfalls oberhalb der Platte oder Folie unweit der Klappe an den Ofen angeschlossen ist.

Gemäß einer anderen Weiterbildung der Erfindung sind Kühlwalzen zum Transportieren und Abkühlen der Polyolefinplatte oder -folie vorgesehen, von denen wenigstens eine in eine Wand des Ofens unter Ausbildung von geringen Spalten eingebaut ist. Mit Hilfe dieser Weiterbildung ist die erfindungsgemäße Vorrichtung nahezu vollkommen als geschlossenes System ausgebildet, so daß der Energieverbrauch der erfindungsgemäßen Vorrichtung verringert und die Umweltverträglichkeit der Vorrichtung verbessert ist. Außerdem ist dadurch ein Eindringen von Fremdluft in die erfindungsgemäße Vorrichtung weitgehend verhindert. Ferner ist durch eine derartige Anbringung der Kühlwalzen die Gesamtlänge der erfindungsgemäßen Vorrichtung im Vergleich zu einer herkömmlichen Vorrichtung verringert.

### Kurze Beschreibung der Zeichnung

Ausführungsbeispiele des Erfindungsgegenstandes werden nachfolgend anhand der Zeichnung näher erläutert. Es zeigen:
- Fig. 1: einen schematischen, teilweisen Längsschnitt durch eine Vorrichtung zum Vernetzen und/oder Aufschäumen von Polyolefinplatten oder -folien gemäß einer ersten Ausführungsform; und
- Fig. 2: einen schematischen, teilweisen Längsschnitt durch die Vorrichtung gemäß einer zweiten Ausführungsform, wobei hier der Einfachheit halber die Polyolefinplatte oder -folie nicht dargestellt ist.

### Wege zur Ausführung der Erfindung

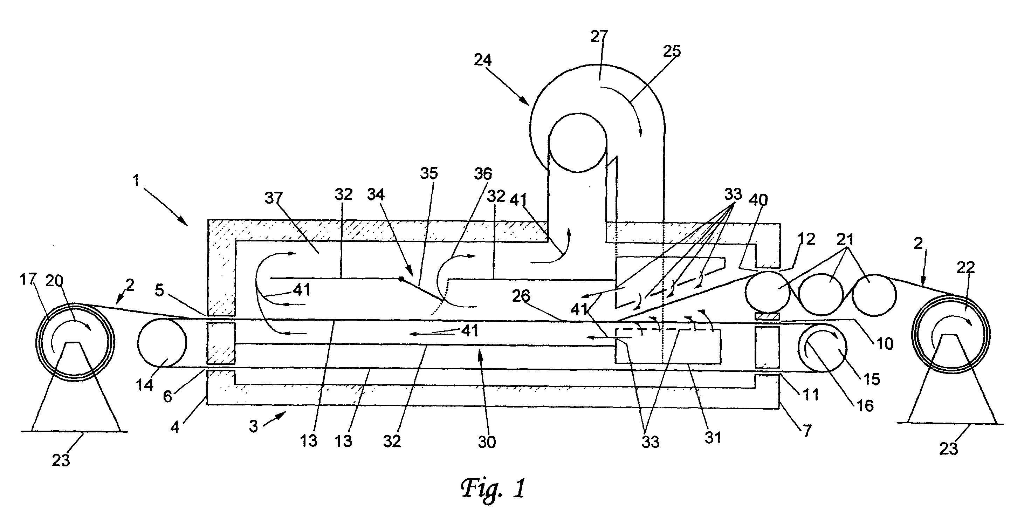

Ein erstes Ausführungsbeispiel einer erfindungsgemäßen Vorrichtung 1 zum Vernetzen und Aufschäumen von vernetzbaren Polyolefinplatten oder -folien 2 oder zum Aufschäumen von vernetzten Polyolefinplatten oder -folien 2 ist schematisch in einem teilweisen Längsschnitt in Fig. 1 gezeigt.

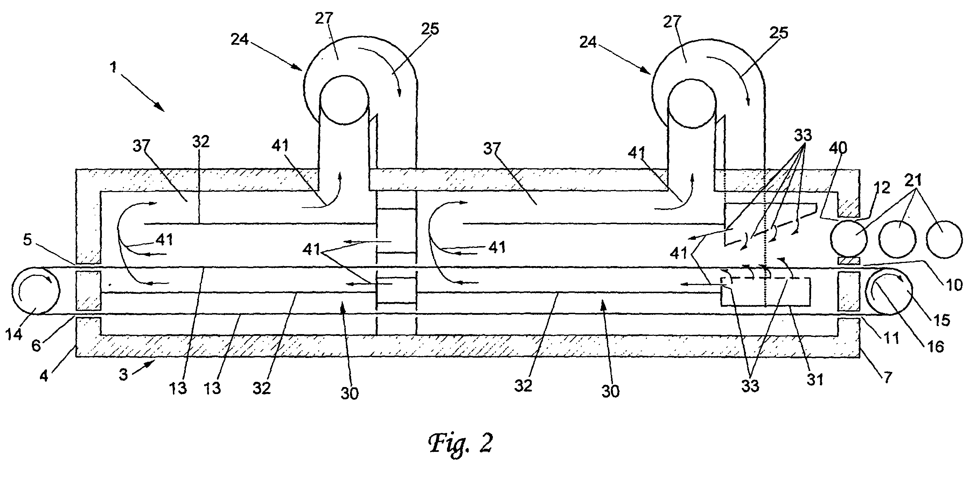

Die Vorrichtung 1 weist dazu einen länglichen Ofen 3 auf, welcher gemäß Fig. 1 und 2 als sogenannter Durchlaufofen ausgebildet ist. An seiner Vorderseite 4 (in Fig. 1 links gezeigt) hat der Ofen 3 zwei übereinander angeordnete Durchtrittsöffnungen 5, 6. Ferner hat der Ofen an seiner Rückseite 7 zwei übereinander angeordnete Durchtrittsöffnungen 10, 11 sowie oberhalb der oberen Durchtrittsöffnung 10 in der Rückseite 7 eine Ausnehmung 12.

Durch die Durchtrittsöffnung 5, 6 der Vorderseite 4 und die Durchtrittsöffnungen 10, 11 der Rückseite 7 des Ofens 3 läuft ein netzartiges, über Rollen 14, 15 geführtes Trägerband 13. Die in Fig. 1 rechts gezeigte Rolle 15 ist als Antriebsrolle dargestellt. Ihre Drehrichtung ist durch den Pfeil 16 angedeutet.

Die Polyolefinplatte oder -folie 2, nachfolgend Platte oder Folie genannt, ist in Form eines langen Bandes ausgebildet und befindet sich zunächst auf einer Walze 17, deren Drehrichtung durch den Pfeil 20 angedeutet ist. Es ist auch möglich, die Folie unmittelbar, d.h. ohne Verwendung der Walze 17, von der Düse des Extruders zum Trägerband 13 zu leiten. Die Folie 2 liegt auf dem oberen Abschnitt des Trägerbandes 13 nahezu über die gesamte Länge des Ofens 3 auf und ist dann über Kühlwalzen 21 auf eine Aufwickelwalze 22 geführt, die im rechten Teil der Fig. 1 gezeigt ist. Die Drehrichtung der Aufwickelwalze 22 entspricht derjenigen der Walze 17. Sowohl die Walze 17 als auch die Aufwickelwalze 22 sind auf Stützböcken 23 drehbar gelagert.

Die Vorrichtung 1 weist ferner eine dem Ofen 3 zugeordnete Einrichtung 24 zum Erwärmen der in dem Ofen 3 befindlichen Platte 2 mittels Heißluft 25 auf. Erfindungsgemäß ist die Einrichtung 24 zum Erwärmen der Platte oder Folie 2 derart angeordnet und ausgebildet, daß die Strömungsrichtung der aus der Einrichtung austretenden Heißluft 25 etwa parallel zur Platten- oder Folienebene 26 verläuft. Die Strömungsrichtung der Heißluft 25 verläuft gemäß Fig. 1 in Längsrichtung der Platte oder Folie 2 und genauer im Gegenstrom zur Transportrichtung der durch den Ofen 3 mit Hilfe des Trägerbandes 13 geleiteten Folie 2.

Die Einrichtung 24 zum Erwärmen der Folie 2 weist einen Ventilator 27 und einen die im Ofen 3 befindliche Folie 2 umschließenden Wärmetunnel 30 auf. Der Wärmetunnel umschließt die in dem Ofen 3 befindliche Folie 2 vollständig in deren Querrichtung und erstreckt sich nahezu über den gesamten Längsabschnitt der im Ofen befindlichen Folie 2. Der Wärmetunnel 30 umfaßt gemäß Fig. 1 abstromseitig vom Ventilator 27 zunächst einen kürzeren rechten Abschnitt 31 und einen sich daran zur Vorderseite 4 des Ofens 3 hin anschließenden länglichen Abschnitt 32, wobei der rechte Abschnitt 31 des Wärmetunnels 30 tangential bzw, parallel zur Folienebene 26 gerichtete Strömungsöffnungen 33 hat. Ferner weist der Wärmetunnel 30 eine Einrichtung 34 zum zumindest teilweisen vorzeitigen Rückführen der Heißluft 25 auf, wobei diese Einrichtung 34 eine in der Wand des länglichen Abschnitts 32 des Wärmetunnels 30 vorgesehene Klappe 35 ist, mit deren Hilfe ein mit dem Pfeil 36 bezeichneter Teil der Heißluft 25 in einen außerhalb des Wärmetunnels 30 angeordneten Rücklaufkanal 37 ableitbar ist. Gemäß Fig. 1 ist die Klappe 35 schwenkbar in der Oberwand des Abschnitts 32 des Wärmetunnels 30 gelagert und bildet einen Teil dieser Wand. Die Klappe ist etwa in der Längsmitte des Wärmetunnels 30 angeordnet.

Eine der Kühlwalzen 21 zum Transportieren und Abkühlen der Folie 2 ist in der Ausnehmung 12 der Rückseite 7 derart eingebaut, daß zwischen der betreffenden Kühlwalze 21 und der Rückseite 7 nur geringe Spalte 40 vorgesehen sind.

Zum Betreiben der erfindungsgemäßen Vorrichtung 1 und zum Durchführen des erfindungsgemäßen Verfahrens wird wie folgt vorgegangen.

Das Trägerband 13 läuft mit einer bestimmten Transportgeschwindigkeit in Fig. 1 im Uhrzeigersinn, so daß sich der untere Abschnitt des Trägerbandes 13 in Fig. 1 von rechts nach links und der obere Abschnitt des Trägerbandes von links nach rechts bewegt. Das Trägerband 13 wird über die Rollen 14 und 15 geführt und angetrieben.

Auf der Oberseite des Trägerbandes 13 ist die Folie 2 angeordnet, welche in dem Ofen 3 mit Heißluft 25 beaufschlagt wird. Die Heißluft wird von dem Ventilator 27 zunächst in den rechten Abschnitt 31 des Wärmetunnels 30 geführt und tritt aus diesem Abschnitt über die Strömungsöffnungen 33 entlang der Folie 2 tangential zur Folienebene 26 aus. Die Heißluft gelangt dann in den länglichen, linken Abschnitt 32 des Wärmetunnels 30 und strömt dort entgegen der Transportrichtung des Trägerbandes 13 und damit der Folie 2 oben und unten entlang der Folie. Dabei wird die Polyolefinplatte oder -folie 2 zum Herbeiführen chemischer Reaktionen erwärmt, wobei die Temperatur der Heißluft und damit der Folie derart eingestellt wird, daß diese in einem Abschnitt nahe der Vorderseite 4 des Ofens 3 oberhalb der für die Vernetzung der Folie erforderlichen Temperatur und unterhalb einer für das Aufschäumen der Folie erforderlichen Temperatur liegt. In einem in Transportrichtung der Folie nachfolgenden Abschnitt des Wärmetunnels 30, welcher näher zur Rückseite 7 des Ofens 3 hin gerichtet ist, liegt die Temperatur der Heißluft in einem zum Aufschäumen der Folie 2 geeigneten Bereich. Die Strömungsführung der Heißluft 25 wird durch die Pfeile 41 angedeutet.

In dem in Transportrichtung der Folie letzten (in Fig. 1 rechten) Bereich des Ofens dehnt sich die Folie aufgrund der Gasbildung des Blähmittels dreidimensional aus und wird mit Hilfe der Kühlwalzen 21, welche auch die Funktion von sogenannten Abzugswalzen haben, vom Trägerband 13 abgeblasen bzw. abgezogen und schließlich im vernetzten und aufgeschäumten Zustand auf die Aufwickelwalze 22 aufgerollt. Das Abblasen der Folie vom Trägerband erfolgt üblicherweise mit Hilfe der durch die unter dem Trägerband 13 angeordneten Strömungsöffnungen 33 abströmenden Heißluft.

Die Temperatur der Heißluft wird z. B. über Gasbrenner im Luftkreislauf oder durch Einleitung von Heißluft in den Kreislauf erzeugt und geregelt. Der Wärmeübergang zwischen der Heißluft und der Polyolefinplatte oder -folie 2 wird über eine Regelung der Strömungsgeschwindigkeit der Heißluft 25 eingestellt, indem ein Teil entlang der Folie 2 strömenden Heißluft von dieser mit Hilfe der Klappe 35 aus dem Wärmetunnel 30 in den Rücklaufkanal 37 abgeleitet wird. Dadurch verringert sich die Strömungsgeschwindigkeit der restlichen Heißluft in dem in Strömungsrichtung der Luft der Klappe 35 nachgeordneten Abschnitt des Wärmetunnels 30. Es ist somit möglich, den Wärmeübergang von der Heißluft zur Folie über eine Regelung der Strömungsgeschwindigkeit der Heißluft gezielt zu beeinflussen.

Es ist klar, daß die vorgenannten Verfahrensschritte "Vernetzung" und "Aufschäumung" von der Temperatur und der Verweilzeit des jeweiligen Abschnitts der Folie in einem bestimmten Bereich des Ofens abhängen. Bei vorgegebener Temperatur ist eine Erhöhung der Ausstoßleistung somit durch eine Erhöhung der Verweilzeit, d. h. durch eine Verlängerung des Ofens, möglich. Eine Verlängerung des Wärmetunnels ist technisch einfach und preisgünstig durchführbar, da im Gegensatz zu herkömmlichen Öfen nicht zwangsläufig weitere Blaskästen, Ventilatoren und Heißiuftbrenner einschließlich der jeweiligen Regelungseinrichtungen zu installieren sind.

Ein zweites Ausführungsbeispiel der Erfindung ist in Fig. 2 dargestellt, wobei gleiche oder ähnliche Merkmale gleiche Bezugszeichen tragen. Der Einfachheit halber ist in der Darstellung gemäß Fig. 2 die Polyolefinplatte oder -folie 2 ebenso wie die Walze 17 und die Aufwickelwalze 22 mit ihren jeweiligen Stützböcken 23 nicht gezeigt.

Aus Fig. 2 ist ersichtlich, daß die im rechten Teil des gezeigten Ofens 3 dargestellte Einrichtung 24 zum Erwärmen der Platte einen rechten und einen länglichen, linken Abschnitt 31, 32 des Wärmetunnels 30 aufweist, während die im linken Teil der Fig. 2 gezeigte Einrichtung 24 lediglich den länglichen Abschnitt 32 zeigt. Diese Unterschiede ergeben sich dadurch, daß die Folie erst am Ende des Ofens 3 aufschäumt und erst in diesem Bereich von dem Trägerband 13 abgezogen wird, so daß der rechte Abschnitt 31 des Wärmetunnels 30 auch nur in diesem Teil des Ofens vorzusehen ist,

Bei dieser Ausführungsform ist der Wärmetunnel 30 in zwei hintereinanderliegende Abschnitte aufgeteilt, um eine optimale Anpassung an die Erfordernisse des herzustellenden Produktes zu erreichen und/oder um die Ausstoßleistung zu erhöhen. Es ist klar, daß die in Fig. 2 gezeigten hintereinanderliegenden zwei Wärmetunnel auch jeweils eine oder mehrere Einrichtungen zum Rückführen eines Teils der Heißluft aufweisen können.

Außerdem können die Klappen 35 auch in dem unterhalb des Trägerbandes 13 ausgebildeten Teil des Wärmetunnels vorgesehen sein. Es ist ferner möglich, den unteren Teil des linken, länglichen Abschnitts 32 des Wärmetunnels 30, anders als in den Fig. 1 und 2 dargestellt, kurz vor der Innenseite der Vorderseite 4 des Ofens 3 enden zu lassen, so daß die aus dem Wärmetunnel 30 ausströmende Luft von dem unterhalb des Trägerbandes vorgesehenen Abschnitt des Wärmetunnels nicht, wie im Fall der Fig. 1 und 2 ausschließlich durch das Trägerband, sondern auch mit Hilfe des Abstandes zwischen der Innenwand der Vorderseite 4 des Ofens und dem Ende des Wärmetunnels daran vorbei in den Rücklaufkanal 37 abströmen kann.

Damit ist es möglich, aufgeschäumte Polyolefinplatten oder -folien wirtschaftlicher und umweltfreundlicher herstellen zu können.

### Legende

- 1.: Vorrichtung
- 2.: Platte/Folie
- 3.: Ofen
- 4.: Vorderseite
- 5.: Durchtrittsöffnungen
- 6.: Durchtrittsöffnungen
- 7.: Rückseite
- 8.: frei
- 9.: frei
- 10.: Durchtrittsöffnungen
- 11.: Durchtrittsöffnungen
- 12.: Ausnehmung
- 13.: Trägerband
- 14.: Rollen
- 15.: Rolle(n)
- 16.: Pfeil
- 17.: Walze
- 18.: frei
- 19.: frei
- 20.: Pfeil
- 21.: Kühlwalzen
- 22.: Aufwickelwalze
- 23.: Stützböcken
- 24.: Einrichtung
- 25.: Heißluft
- 26.: Folienebene
- 27.: Ventilator
- 28.: frei
- 29.: frei
- 30.: Wärmetunnel
- 31.: rechter Abschnitt
- 32.: länglicher Abschnitt
- 33.: Strömungsöffnungen
- 34.: Einrichtung
- 35.: Klappe(n)
- 36.: Pfeil
- 37.: Rücklaufkanal
- 38.: frei
- 39.: frei
- 40.: Spalte
- 41.: Pfeile

## Patentansprüche

1. Verfahren zum Vernetzen und Aufschäumen von vernetzbaren Polyolefinplatten oder -folien oder zum Aufschäumen von vernetzten Polyolefinplatten oder -folien, bei welchem die im wesentlichen kontinuierlich transportierte Polyolefinplatte oder -folie mit Heißluft beaufschlagt wird, **dadurch gekennzeichnet, daß** die Heißluft entgegen der Transportrichtung der Polyolefinplatte oder - folie an dieser entlangströmt.

2. Verfahren nach Anspruch 1, **dadurch gekennzeichnet, daß** die Heißluft an der Oberseite und an der Unterseite der Polyolefinplatte oder -folie entlangströmt,

3. Verfahren nach Anspruch 1 oder 2, **dadurch gekennzeichnet, daß** der Wärmeübergang zwischen der Heißluft und der Polyolefinplatte oder -folie über eine Regelung der Strömungsgeschwindigkeit der Heißluft eingestellt wird, indem ein Teil der entlang der Platte oder Folie strömenden Heißluft von dieser abgeleitet wird.

4. Verfahren nach einem der vorhergehenden Ansprüche, **dadurch gekennzeichnet, daß** die Heißluft in einem nahezu geschlossenen Kreislauf geführt wird.

5. Vorrichtung zum Vernetzen und Aufschäumen von vernetzbaren Polyolefinplatten oder -folien oder zum Aufschäumen von vernetzten Polyolefinplatten oder -folien, insbesondere zum Durchführen eines Verfahrens nach einer der vorhergehenden Ansprüche, mit einem Ofen (3) und einer diesem zugeordneten Einrichtung (24) zum Erwärmen der in dem Ofen (3) befindlichen Polyolefinplatte oder -folie (2) mittels Heißluft (25) **dadurch gekennzeichnet, daß** die Einrichtung (24) zum Erwärmen der Polyolefinplatte oder -folie (2) derart angeordnet und ausgebildet ist, daß die Strömungsrichtung der aus der Einrichtung (24) austretenden Heißluft (25) etwa parallel zur Platten- oder Folienebene (26) verläuft.

6. Vorrichtung nach Anspruch 5, **dadurch gekennzeichnet, daß** die Strömungsrichtung der Heißluft (25) in Längsrichtung der Platte oder Folie (2) verläuft.

7. Vorrichtung nach Anspruch 5 oder 6, **dadurch gekennzeichnet, daß** die Heißluft (25) im Gegenstrom zur Transportrichtung der durch den Ofen (3) geleiteten Platte oder Folie (2) geführt ist.

8. Vorrichtung nach einem der Ansprüche 5 bis 7, **dadurch gekennzeichnet, daß** die Einrichtung (24) zum Erwärmen der Polyolefinplatte oder -folie (2) wenigstens einen die Platte oder Folie (2) umschließenden Wärmetunnel (30) aufweist.

9. Vorrichtung nach Anspruch 8, **dadurch gekennzeichnet, daß** der Wärmetunnel (30) die Polyolefinplatte oder -folie (2) in deren Querrichtung vollständig umschließt und sich nahezu über den gesamten, im Ofen (3) befindlichen Längsabschnitt der Platte oder Folie (2) erstreckt.

10. Vorrichtung nach einem der Ansprüche 5 bis 9, **dadurch gekennzeichnet, daß** die Einrichtung (24) zum Erwärmen der Polyolefinplatte oder -folie (2) eine Einrichtung (34) zum zumindest teilweisen vorzeitigen Rückführen der Heißluft (25) aufweist.

11. Vorrichtung zumindest nach den Ansprüchen 8 und 10, **dadurch gekennzeichnet, daß** die Einrichtung (34) zum zumindest teilweisen vorzeitigen Zurückführen der Heißluft (25) wenigstens eine im Wärmetunnel (30) vorgesehene Klappe (35) ist, mit deren Hilfe zumindest ein Teil (36) der den Wärmetunnel durchströmenden Heißluft (25) in den außerhalb des Wärmetunnels (30) angeordneten Bereich des Ofens (3) ableitbar ist.

12. Vorrichtung nach Anspruch 11, **dadurch gekennzeichnet, daß** die Klappe (35) schwenkbar in der Wand des Wärmetunnels (30) gelagert ist und einen Teil derselben bildet.

13. Vorrichtung nach Anspruch 11 oder 12, **dadurch gekennzeichnet, daß** die Klappe (35) etwa in der Längsmitte des Wärmetunnels (30) in dem oberhalb der Polyolefinplatte oder -folie angeordneten Teil desselben angeordnet ist.

14. Vorrichtung nach einem der Ansprüche 5 bis 13, **dadurch gekennzeichnet, daß** Kühlwalzen (21) zum Transportieren und Abkühlen der Polyolefinplatte oder -folie (2) vorgesehen sind, von denen wenigstens eine in eine Wand (7) des Ofens (3) unter Ausbildung von geringen Spalten (40) eingebaut ist.

## Claims

1. Process for crosslinking and foaming crosslinkabte polyolefin sheets or polyolefin films or for foaming crosslinked polyolefin sheets or polyolefin films, in which the essentially continuously transported polyolefin sheet or polyolefin film is brought into contact with hot air, **characterized in that** the hot air flows along the polyolefin sheet or polyolefin film in the direction opposite that of the transport of the sheet or film.

2. Process according to Claim 1, **characterized in that** the hot air flows along the upper side and along the lower side of the polyolefin sheet or polyolefin film.

3. Process according to Claim 1 or 2, **characterized in that** the heat transfer between the hot air and the polyotefin sheet or polyolefin film is adjusted via control of the rate of flow of the hot air, by diverting some of the hot air flowing along the sheet or film away from this.

4. Process according to one of the preceding claims, **characterized in that** the hot air is conducted in a virtually dosed circulation system.

5. Apparatus for crosslinking and foaming crosslinkable polyolefin sheets or polyolefin films or for foaming crosslinked polyolefin sheets or polyolefin films, in particular for carrying out a process according to one of the preceding claims, with an oven (3) and equipment (24) allocated thereto for heating the polyolefin sheet or polyolefin film (2) in the oven (3) by means of hot air (25), **characterized in that** the equipment (24) for heating the polyolefin sheet or polyolefin film (2) has been arranged and constructed in such a way that the direction of flow of the hot air (25) emerging from the equipment (24) runs approximately parallel to the plane (26) of the sheet or film.

6. Apparatus according to Claim 5, **characterized in that** the direction of flow of the hot air (25) runs in the longitudinal direction of the sheet or film (2).

7. Apparatus according to Claim 5 or 6, **characterized in that** the hot air (25) is conducted countercurrently to the direction of transport of the sheet or film (2) passed through the oven (3).

8. Apparatus according to one of Claims 5 to 7, **characterized in that** the equipment (24) for heating the polyolefin sheet or polyolefin film (2) has at least one heating tunnel (30) surrounding the sheet or film (2).

9. Apparatus according to Claim 8, **characterized in that** the heating tunnel (30) completely surrounds the polyolefin sheet or polyolefin film (2) in its transverse direction and extends over virtually the entirety of that longitudinal section of the sheet or film (2) which is located in the oven (3).

10. Apparatus according to one of Claims 5 to 9, **characterized in that** the equipment (24) for heating the polyolefin sheet or polyolefin film (2) has equipment (34) for recycling at least some of the hot air (25) prior to its use.

11. Apparatus at least according to Claims 8 and 10, **characterized in that** the equipment (34) for recycling at least some of the hot air (25) prior to use is at least one flap (35) provided in the heating tunnel (30), with the aid of which flap at least a part (36) of the hot air (25) flowing through the heating tunnel can be diverted into the area of the oven (3) arranged outside the heating tunnel (30).

12. Apparatus according to Claim 11, **characterized in that** the flap (35) has been mounted in the wall of the heating tunnel (30) in such a way that it can swivel and forms a part of this wall.

13. Apparatus according to Claim 11 or 12, **characterized in that** the flap (35) has been arranged approximately at the longitudinal centre of the heating tunnel (30) **in that** part of the same which is arranged above the polyolefin sheet or polyolefin film.

14. Apparatus according to one of Claims 5 to 13, **characterized in that** chill rolls (21) have been provided for transporting and cooling the polyolefin sheet or polyolefin film (2), and at least one of these has been built into a wall (7) of the oven (3) in such a way that the gaps (40) formed are small.

## Revendications

1. Procédé de réticulation et d'expansion de plaques ou de films de polyoléfines réticulables ou de d'expansion de plaques ou de films de polyoléfines réticulées, selon lequel la plaque ou le film de polyoléfines transportée essentiellement en continu est exposée à de l'air chaud, **caractérisé en ce que** l'air chaud circule le long de la plaque ou du film de polyoléfines dans la direction opposée à la direction de transport.

2. Procédé selon la revendication 1, **caractérisé en ce que** l'air chaud s'écoule sur la face supérieure et sur la face inférieure de la plaque ou du film de polyoléfines.

3. Procédé selon la revendication 1 ou 2, **caractérisé en ce que** le transfert de chaleur entre l'air chaud et la plaque ou le film de polyoléfines est réglé par l'intermédiaire d'une régulation de la vitesse d'écoulement de l'air chaud, une partie de l'air chaud qui s'écoule le long de la plaque ou du film de polyoléfines étant détournée.

4. Procédé selon une des revendications précédentes, **caractérisé en ce que** l'air chaud circule en circuit quasiment fermé.

5. Dispositif pour la réticulation et l'expansion de plaques ou de films de polyoléfines réticulables ou l'expansion de plaques ou de films de polyoléfines réticulées, notamment pour la mise en oeuvre d'un procédé selon une des revendications précédentes, comprenant un four (3) et un dispositif (24) associé à celui-ci pour réchauffer au moyen d'air chaud la plaque ou le film de polyoléfines (2) présente dans le four (3), **caractérisé en ce que** le dispositif (24) pour le réchauffage de la plaque ou du film de polyoléfines (2) est disposé et agencé de telle sorte que la direction d'écoulement de l'air chaud (25) sortant du dispositif (24) soit sensiblement parallèle au plan de la plaque ou du film (26).

6. Dispositif selon la revendication 5, **caractérisé en ce que** la direction d'écoulement de l'air chaud (25) s'étend dans la direction longitudinale de la plaque ou du film (2).

7. Dispositif selon la revendication 5 ou 6, **caractérisé en ce que** l'air chaud (25) s'écoule dans la direction opposée à la direction de transport de la plaque ou du film (2) circulant dans le four (3).

8. Dispositif selon une des revendications 5 à 7, **caractérisé en ce que** le dispositif (24) de réchauffage de la plaque ou du film de polyoléfine (2) comprend au moins un tunnel chauffant (30) qui entoure la plaque ou le film (2).

9. Dispositif selon la revendication 8, **caractérisé en ce que** le tunnel chauffant 30) entoure entièrement la plaque ou le film de polyoléfine (2) dans la direction transversale de celle-ci et s'étend sur la quasi totalité du tronçon de plaque ou de film (2) présent dans le four (3)

10. Dispositif selon une des revendications 5 à 9, **caractérisé en ce que** le dispositif (24) de réchauffage de la plaque ou du film de polyoléfine (2) comprend au moins un dispositif (34) pour le recyclage anticipé au moins partiel de l'air chaud (25)

11. Dispositif au moins selon les revendications 8 et 10, **caractérisé en ce que** le dispositif (34) pour le recyclage anticipé au moins partiel de l'air chaud (25) est au moins un volet (35) prévu dans le tunnel chauffant (30), à l'aide duquel au moins une partie (36) de l'air chaud (25) qui s'écoule dans le tunnel chauffant peut être déviée vers la partie du four (3) extérieure au tunnel chauffant (30).

12. Dispositif selon la revendication 11, **caractérisé en ce que** le volet (35) est monté pivotant dans la paroi du tunnel chauffant (30) et constitue une partie de celui-ci.

13. Dispositif selon la revendication 11 ou 12, **caractérisé en ce que** le volet (35) est disposé sensiblement au milieu du tunnel chauffant (30), dans la partie de celui-ci qui est située au-dessus de la plaque ou du film de polyoléfines.

14. Dispositif selon une des revendications 5 à 13, **caractérisé en ce qu'**il est prévu des cylindres de refroidissement (21) pour transporter et refroidir la plaque ou le film de polyoléfines (2), parmi lesquels un au moins est monté dans une paroi (7) du four (3) et délimite des fentes (40) étroites.
